# EUROPEAN PATENT APPLICATION

(11) **EP 0 957 634 A2**
(43) Date of publication of application: **17.11.1999**
(21) Application number: 99303730.8
(22) Date of filing: 13.05.1999
(51) Int. Cl.: H04N 5/335

(54) **Onboard camera**

(30) Priority: 14.05.1998 JP 13226798
(71) Applicant: FUJI JUKOGYO KABUSHIKI KAISHA, Tokyo (JP)
(72) Inventor: Sogawa, Yoshiyuki, Mitaka-shi, Tokyo 181-0015 (JP)
(74) Representative: Shindler, Nigel

(57) **Abstract**

An onboard camera having a plurality of photodiodes arranged on an image pickup surface of a CCD (3) element for storing electronic signals transformed from light signals taken by optical means, a vertical transfer pass provided to transmit said electronic signals in a vertical direction, transfer gate means interposed between said photodiodes and said vertical transfer pass, and a horizontal transfer pass connected to said vertical transfer pass and provided to transmit said electronic signals in a horizontal direction, comprising a normally usable range (C1) provided in a lower side of said image pickup surface to form an object image through said optical means by receiving said light signals, and a normally unusable range (C2) provided in an upper side of said image pickup surface to form no image through said optical means by receiving said light signals so as to avoid said object image from smearing by strong and unnecessary electronic signals and to improve a reliability of object recognition process, wherein said CCD element having said normally usable range and normally unusable range is offset with respect to an imaging range of the optical means.

## Description

### BACKGROUND OF THE INVENTION

### 1. Field of the Invention:

The present invention relates to an onboard camera including an image pickup element which photoelectrically converts light having passed through an optical system to store signal electric charges, and outputs the stored signal electric charges through a vertical transfer path and a horizontal transfer path.

### 2. Description of the Related Art:

In recent years, in a vehicle such as an automobile, a technique for recognizing a state outside of the vehicle by mounting a camera to take a view outside of the vehicle and by carrying out picture processing has been developed. In this onboard camera, as an image pickup element for converting an optically formed image of an object into an electric signal, there is generally adopted an image pickup element such as a CCD element in which light is converted into electric signals at a photoelectric conversion portion, and stored signal electric charges are read out from a vertical transfer path through a horizontal transfer path.

In general, as the CCD element, an interline transfer system CCD element in which a photoelectric conversion portion and a vertical transfer path are arranged to be two-dimensionally adjacent to each other, has come into wide use. In the interline transfer system CCD element, when an image of a highly bright object is taken, a white line appearing on a picture in a vertical scanning direction, a so-called smear occurs, which becomes a cause of erroneous recognition in picture recognition processing or the like.

It is supposed that this smear occurs because electric charges overflowed by intense light at the photoelectric conversion portion enter the vertical transfer path, and smear resistance can be improved by using, for example, a frame interline transfer system CCD element provided with a memory region for storing signal electric charges below the vertical transfer path. However, the frame interline transfer system CCD element is used mainly in a field in which high picture quality is required, for example, for broadcasting, and is very expensive.

### SUMMARY OF THE INVENTION

The present invention has been made in view of the above circumstances, and an object is to provide an onboard camera capable of obtaining a picture with little influence of a smear by using a generally used inexpensive image pickup element which has an image pickup surface on which a photoelectric conversion portion for photoelectrically converting light having passed through an optical system to store signal electric charges, and a vertical transfer path for transferring the signal electric charges stored in the photoelectric conversion portion are arranged to be two-dimensionally adjacent to each other, and outputs the signal electric charges transferred to the vertical transfer path through a horizontal transfer path.

The above-described object of the invention can be attained by an onboard camera comprising a built-in image pickup. element which has an image pickup surface on which a photoelectric conversion portion for photoelectrically converting light having passed through an optical system to store signal electric charges, and a vertical transfer path for transferring the signal electric charges stored in the photoelectric conversion portion are arranged to be two-dimensionally adjacent to each other, and outputs the signal electric charges transferred to the vertical transfer path through a horizontal transfer path, wherein
the image pickup surface of the image pickup element is divided and set into two regions of a use region and a nonuse region in an up-and-down direction with respect to the vertical transfer path, and the image pickup element is disposed to be offset with respect to an imaging range of the optical system so that the use region is positioned within the imaging range of the optical system and the nonuse region is positioned outside of the imaging range of the optical system and at a head side.

In the onboard camera of the invention, it is preferred that a member for blocking off incident light onto the nonuse region is disposed between the optical system and the image pickup element.

The onboard camera of the invention preferably includes means for sheltering the signal electric charges stored in the use region through the vertical transfer path into the nonuse region at high speed just before or after exposure timing to the image pickup element.

That is, according to the invention, the image pickup surface on which the photoelectric conversion portion for photoelectrically converting light having passed through the optical system to store the signal electric charges, and the vertical transfer path for transferring the signal electric charges stored in the photoelectric conversion portion are arranged to be two-dimensionally adjacent to each other, is divided and set into the two regions of the use region and the nonuse region in the up-and-down direction with respect to the vertical transfer path, and the image pickup element is disposed to be offset with respect to the imaging range of the optical system so that the use region is positioned within the imaging range of the optical system and the nonuse region is positioned outside of the imaging range of the optical system and at the head side, whereby intense light from a highly bright object such as the sun light is made not to be incident on the image pickup surface and a smear is prevented.

In this case, it is preferable to dispose the member for blocking off the incident light onto the nonuse region between the optical system and the image pickup element to shade the nonuse region, and further, it is preferable to shelter the signal electric charges stored in the use region through the vertical transfer path into the nonuse region at high speed just before or after the exposure timing to the image pickup element.

These and other objects and features of the present invention will become more apparent from the following detailed description with reference to the accompanying drawings.

### BRIEF DESCRIPTION OF THE DRAWINGS

Fig. 1 relates to a first embodiment of the present invention, and is an explanatory view showing an arrangement of a CCD element with respect to an imaging range of an optical image.

Fig. 2 relates to a first embodiment of the present invention, and is a structural view of a camera.

Fig. 3 relates to a first embodiment of the present invention, and is a block diagram showing a structure of the CCD element.

Fig. 4 relates to a second embodiment of the present invention, and is an explanatory view showing a light-shielding range to the CCD element.

Fig. 5 relates to a second embodiment of the present invention, and is an explanatory view showing sheltering of signal electric charges of the CCD element into a nonuse region.

### DESCRIPTION OF THE PREFERRED EMBODIMENTS

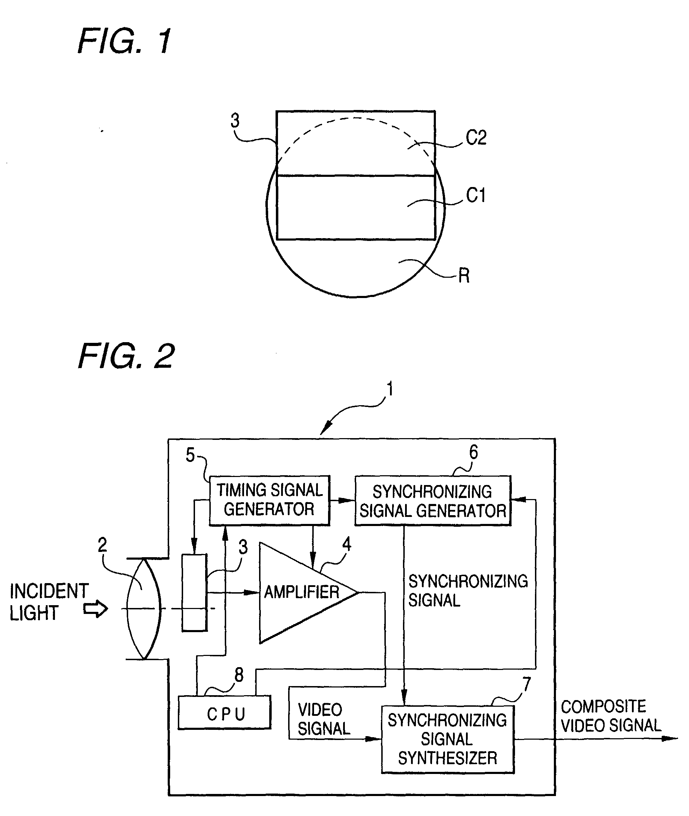

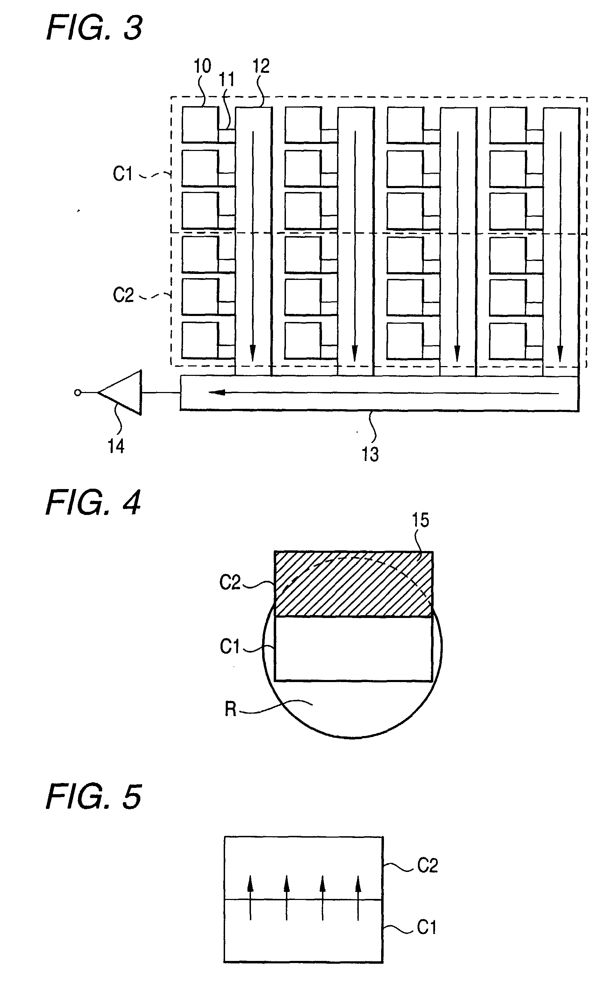

Embodiments of the invention will be described below with reference to the drawings. Figs. 1 to 3 relates to a first embodiment of the invention, Fig. 1 is an explanatory view showing an arrangement of a CCD element with respect to an imaging range of an optical image, Fig. 2 is a structural view of a camera, and Fig. 3 is a block diagram showing a structure of the CCD element.

In Fig. 2, reference numeral 1 denotes a camera which is mounted on a vehicle such as an automobile and takes a view outside of the vehicle to recognize a lane/road shape, an obstacle, and the like by picture recognition. This camera 1 is equipped with a CCD element 3 as an image pickup element for converting an image formed by an optical system 2 made of a lens group into an electric signal, an amplifier 4 for amplifying the signal from the CCD element 3, a timing signal generator 5 for generating timing signals to control the CCD element 3 and the amplifier 4, a synchronizing signal generator 6 for generating synchronizing signals (horizontal synchronizing signal and vertical synchronizing signal), a synchronizing signal synthesizer 7 for outputting a composite video signal (video signal) obtained by synthesizing a video signal outputted from the amplifier 4 and the synchronizing signals, a CPU 8 for collectively controlling circuits such as the timing signal generator 5 and the synchronizing signal generator 6 to make exposure control of the CCD element 3, and the like.

The foregoing CCD element 3 is a well-known interline transfer system CCD element which is constituted by, as shown in Fig. 3, photodiodes 10 two-dimensionally arranged in the horizontal , direction and the vertical direction as photoelectric conversion portions for storing electric charges by receiving light, vertical shift registers 12 forming vertical transfer paths for sequentially transferring the electric charges stored in the photodiodes 10 by receiving light in the vertical direction through transfer gates 11, a horizontal shift register 13 forming a horizontal transfer path for sequentially transferring the electric charges transferred by the vertical shift registers 12 in the horizontal direction, an amplifier 14 for amplifying an output signal from the horizontal shift register 13 and outputting, and the like.

Here, in picture recognition in a vehicle such as an automobile, a field of view in the horizontal direction is more necessary than a field of view in the vertical direction, and when compared with a normal TV picture or the like, an oblong picture is often used. The image pickup surface of the CCD element 3 can be divided into two regions C1 and C2 with reference to the upper region and lower region of the vertical shift register 12 as schematically indicated by broken lines in Fig. 3.

That is, in the onboard camera 1, a picture range in the vertical direction which is actually required is about one half of the whole image pickup surface. The one region C1 of the image pickup surface of the CCD element 3 is made a region which is used for normal picture recognition, the other region C2 is made a region which is not normally used, and as shown in Fig. 1, the CCD element 3 is disposed to be offset with respect to an imaging range R of the optical system 2 so that the use region C1 of the image pickup surface of the CCD element 3 is positioned within the imaging range R of the optical system 2 and the nonuse region C2 is positioned outside of the optical system 2 and at the head side. Incidentally, the upper and lower relation of the use region C1 and the nonuse region C2 may be opposite to the positional relation in Fig. 3.

In the camera 1 of the structure described above, a pulse for controlling a signal electric charge storage period to the photodiode 10, a pulse for driving the vertical shift register 12, and a pulse for driving the horizontal shift register 13 are supplied from the timing signal generator 5 to the CCD element 3, and imaging light is changed into signal electric charges which are read out in, for example, a field storage mode. After the video signal from the CCD element 3 is amplified by the amplifier 4, it is synthesized with the horizontal synchronizing signal and the vertical synchronizing signal from the synchronizing signal generator 6 so that the composite video signal is generated and is outputted to a not-shown picture processing device.

In this case, since the CCD element 3 is disposed to be offset toward the head side with respect to the imaging range R of the optical system 2, intense light from a highly bright object such as the sun forms an image at a position away from the use region C1 of the CCD element 3 to the lower side (road side). Thus, on the image pickup surface of the use region C1 of the CCD element 3, there does not occur a phenomenon that electric charges overflow from the photodiode 10 to the vertical shift register 12.

By this, the oblong picture generated on the image pickup surface of the use region C1 of the CCD element 3 becomes the picture in which influence of a smear is reduced. By using this picture with few smears, it is possible to prevent erroneous recognition in recognition processing to an object outside of the vehicle, and to greatly improve reliability.

Figs. 4 and 5 relates to a second embodiment of the present invention, Fig. 4 is an explanatory view showing a light-shielding range to a CCD element, and Fig. 5 is an explanatory view showing sheltering of signal electric charges of the CCD element into a nonuse region.

As compared with the forgoing first embodiment, this embodiment further strengthens measures against the smear, and a masking member 15 for blocking off incident light onto the image pickup surface of the nonuse region C2 of the CCD element 3 is disposed between the optical system 2 of the camera 1 and the CCD element 3.

That is, by applying light-shielding to the image pickup surface of the nonuse region C2 of the CCD element 3, when signal electric charges are read out from the CCD element 3 in a field storage mode, mixture of electric charges from the nonuse region C2 to the vertical shift register 12 does not occur. Thus, it is possible to prevent the regular signal electric charges of the use region C1 from being disturbed by electric charges due to unnecessary light at the nonuse region C2, and to further reduce the influence of the smear.

In this case, since storage of electric charges by photoelectric conversion does not occur in the nonuse region C2, it can be used as a pseudo memory portion. As shown in Fig. 5, by sheltering the regular signal electric charges photoelectrically converted in the use region C1 through the vertical shift register 12 into the nonuse region C2 at high speed just before or after exposure timing controlled by the CPU 8, even in the case where intense light is incident on the use region C1 by some rare accident, the influence of the smear can be avoided.

As described above, according to the present invention, the image pickup surface on which the photoelectric conversion portion for photoelectrically converting light having passed through the optical system to store signal electric charges, and the vertical transfer path for transferring the signal electric charges stored in the photoelectric conversion portion are disposed to be two-dimensionally adjacent to each other, is divided into the two regions of the use region and the nonuse region in the up-and-down direction of the vertical transfer path, and the image pickup element is arranged to be offset with respect to the imaging range of the optical system so that the use region is positioned within the imaging range of the optical system and the nonuse region is positioned outside of the imaging range of the optical system and at the head side, whereby it is possible to prevent the occurrence of the smear caused by the incidence of intense light from a highly bright object such as the sun onto the image pickup surface. Thus, when the picture taken on the image pickup surface of the use region is made the picture with few smears, and this picture is used, such excellent effects can be obtained that erroneous recognition or the like in the recognition processing of an object can be prevented, and reliability can be improved.

While the invention has been described in conjunction with preferred specific embodiment thereof, it will be understood that this description is intended to illustrate and not limit the scope of the invention, which is defined by the following claims.

## Claims

1. An onboard camera (1) having a plurality of photodiodes (10) arranged on an image pickup surface of a CCD element (3) for storing electronic signals transformed from light signals taken by optical means (2), a vertical transfer pass (12) provided to transmit said electronic signals in a vertical direction, transfer gate means (11) interposed between said photodiodes (10) and said vertical transfer pass (12), and a horizontal transfer pass (13) connected to said vertical transfer pass (12) and provided to transmit said electronic signals in a horizontal direction, comprising:
a normally usable range (C1) provided in a lower side of said image pickup surface to form an object image through said optical means (2) by receiving said light signals; and
a normally unusable range (C2) provided in an upper side of said image pickup surface to form no image through said optical means (2) by receiving said light signals so as to avoid said object image from smearing by strong and unnecessary electronic signals and to improve a reliability of object recognition process;
wherein said CCD element (3) having said normally usable range (C1) and normally unusable range (C2) is offset with respect to an imaging range of the optical means (2).

2. The onboard camera (1) according to claim 1, further comprising:
a shutter (15) provided in front of said normally unusable range (C2) to intercept incident light so as to avoid smearing said object image on said normally usable range (C1) due to mixing thereof.

3. The onboard camera (1) according to claim 2, further comprising:
siding means provided to move said electronic signals from said normally usable range (C1) to said normally unusable range (C2) at a high speed in order to store thereof at just before and after an exposure timing.
